# EUROPÄISCHE PATENTSCHRIFT

(11) **EP 3 269 220 B1**
(45) Veröffentlichungstag und Bekanntmachung des Hinweises auf die Patenterteilung: **20.02.2019**
(21) Anmeldenummer: 17401075.1
(22) Anmeldetag: 05.07.2017
(51) Int. Cl.: A01B 49/02, A01B 33/12

(54) **BODENBEARBEITUNGSMASCHINE**
SOIL PROCESSING MACHINE
MACHINE DE TRAVAIL DU SOL

(30) Priorität: 14.07.2016 DE 102016112948
(43) Veröffentlichungstag der Anmeldung: 17.01.2018
(73) Patentinhaber: Amazonen-Werke H. Dreyer GmbH & Co. KG, 49205 Hasbergen (DE)
(72) Erfinder: Ehlers, Jan-Gerd, 26160 Bad Zwischenahn (DE); Brammer, Hauke, 26197 Großenkneten (DE)

(56) Entgegenhaltungen:
- EP-A1- 0 261 269
- EP-A1- 2 392 203
- DE-A1- 3 641 081

## Beschreibung

Die Erfindung betrifft eine Bodenbearbeitungsmaschine gemäß des Oberbegriffes des Patentanspruches 1.

Eine derartige Bodenbearbeitungsmaschine ist in der DE 36 41 081 A1 beschrieben. Diese Bodenbearbeitungsmaschine weist einen sich quer zur Fahrtrichtung erstreckenden Werkzeugrahmen, an denen mehrere beabstandet zueinander angeordnete Bodenbearbeitungswerkzeuge zur Bodenbearbeitung angeordnet sind, auf. Hinter den Bodenbearbeitungswerkzeugen ist eine einen Tragrahmen aufweisende Bodenwalze angeordnet. Die Bodenwalze weist einen Tragrahmen auf. An diesem Tragrahmen sind auf der Vorderseite Kuppelelemente zum Ankuppeln der Bodenwalze an dem Werkzeugrahmen der Bodenbearbeitungsmaschine angeordnet. An den Kuppelelementen der Bodenwalze sind quer zur Fahrtrichtung beabstandet zueinander angeordnete Tragarme zur Verbindung der Bodenwalze mit dem Werkzeugrahmen angeordnet. Zwischen den Tragarmen und dem Werkzeugrahmen sind Einstellelemente angeordnet, um in höhenverstellbarer Weise die Eindringtiefe der Bodenbearbeitungswerkzeuge in den Boden einstellen zu können. Zwischen den Bodenbearbeitungswerkzeugen und der Bodenwalze ist eine Planierschiene, die mit dem Tragrahmen der Bodenwalze verbunden ist, in höhenverstellbarer Weise angeordnet. Die Tragarme sind als Viergelenkanordnung ausgebildet. Auf dem Tragrahmen der Bodenwalze ist in lösbarer Weise der Vorratsbehälter einer Sämaschine befestigt. Da die Koppelelemente zum Ankuppeln der Tragarme, mit denen die Bodenwalze mit dem Tragrahmen der Bodenbearbeitungsmaschine verbunden ist, in integrierter Weise mit dem Tragrahmen der Bodenwalze fest verbunden sind, ist im Rahmen eines Baukastensystems keine große Flexibilität gegeben. Auch ist die Anordnung des Planierschildes an der Bodenwalze auf die Ausgestaltung der Bodenwalze und der Tragrahmen abgestimmt und somit unflexibel.

Der Erfindung liegt die Aufgabe zu Grunde, die Flexibilität der Anordnung der Tragarme und des Planierschildes wesentlich zu erhöhen.

Diese Aufgabe der erfindungsgemäß dadurch gelöst, dass zwischen dem Tragrahmen der Bodenwalze und der in Viergelenkanordnung angeordneten Tragarme jeweils eine an den Tragrahmen der Bodenwalze befestigte winkelförmig ausgebildete Konsole, die jeweils einen nach hinten ragenden Konsolenarm und einen vorderen nach unten ragenden Konsolenarm aufweist, angeordnet ist, dass der jeweilige hintere Konsolenarm der Konsole an dem Tragrahmen befestigt ist und der jeweilige vordere Konsolenarm der Konsole in den Zwischenraum zwischen der Rückseite der Bodenbearbeitungswerkzeuge und der Vorderseite der Bodenwalze nach unten ragt, dass an dem nach unten ragenden Konsolenarm das Planierschild jeweils mit einem Tragstiel befestigt ist.

Infolge dieser Maßnahmen werden die Anbindung der Bodenwalze und die Anbindung der Tragarme sowie die Lagerung und Verstellung des Planierschildes in einer einzigen Konsole vereinigt. Auch besteht die Möglichkeit die Sämaschine an der jeweiligen einstückigen Konsole anzuordnen. Somit bildet die jeweilige Konsole ein zentrales Element in dem die unterschiedlichen Funktionen zur Anordnung der verschiedenen Elemente integriert ist. Auch kann die Konsolen für Maschinen unterschiedlicher Breite verwendet werden. Somit ergibt sich auch durch die entsprechende Anordnung eine wesentliche Vereinfachung der verschiedenen Baugruppen.

Eine einfache und flexible Anordnung, auch bei Maschinen unterschiedlicher Arbeitsbreite ergibt sich dadurch, dass die jeweilige Konsole an dem Tragrahmen der Bodenwalze mittels Klemmelementen befestigt ist.

Um Sämaschinen mit der Bodenbearbeitungsmaschine und oder der Bodenwalze in einfacher Weise kombinieren zu können, ist vorgesehen, dass mittels Kuppelelementen auf den jeweils nach hinten ragenden Konsolenarm der Konsolen eine Aufbausämaschine aufsetzbar ist.

Eine einfache Höhenverstellung für das Planierschild lässt sich dadurch erreichen, dass der jeweilige vordere und nach unten ragende Konsolenarm eine Schiebeführung aufweist, dass in dieser Schiebeführung der Tragstiel verschiebbar angeordnet ist.

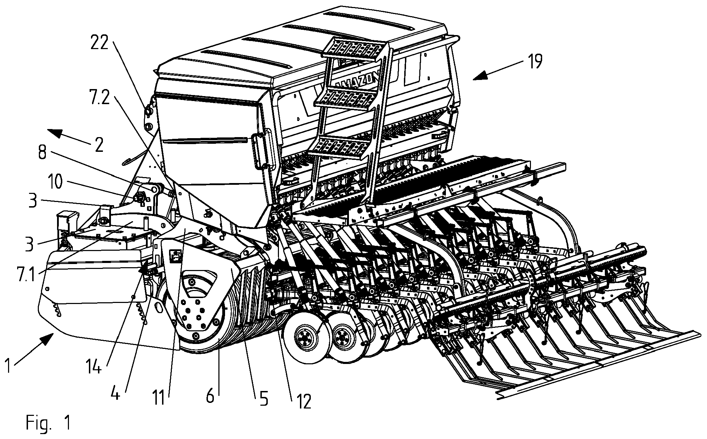

Weitere Einzelheiten der Erfindung sind der Beispielsbeschreibung und den Zeichnungen zu entnehmen. Die Zeichnungen zeigen
- Fig.1: die Bodenbearbeitungsmaschine mit Bodenwalze und Aufbausämaschine in perspektivischer Darstellung,

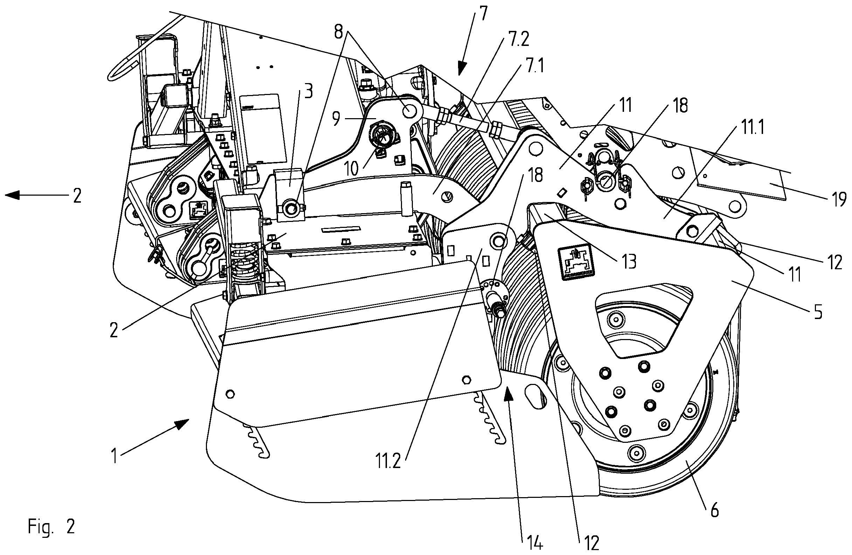

- Fig.2: die Bodenbearbeitungsmaschine mit Bodenwalze und Aufbausämaschine nach Fig.1 in einer anderen perspektivischen Darstellung, ausschnittsweise und im vergrößerten Maßstab,

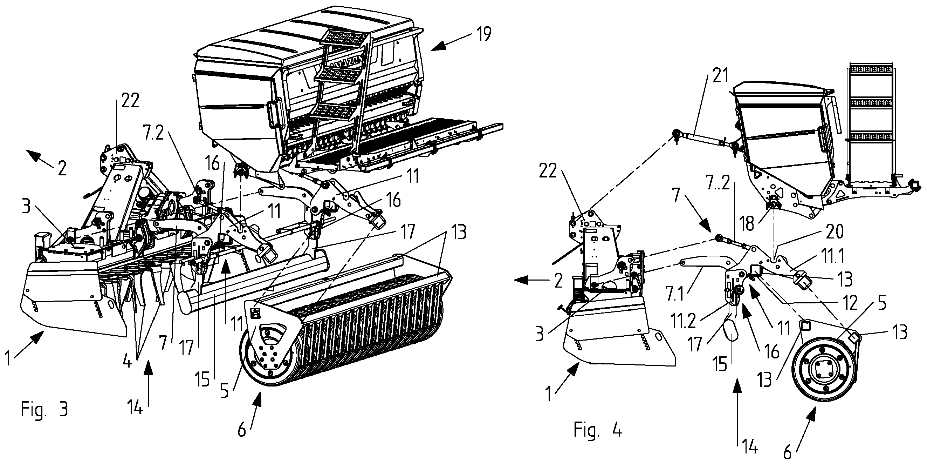

- Fig.3: die Bodenbearbeitungsmaschine mit Bodenwalze und Aufbausämaschine in perspektivischer Darstellung und in Explosionsdarstellung,
- Fig.4: die Bodenbearbeitungsmaschine mit Bodenwalze und Aufbausämaschine nach Fig.1 in Seitenansicht und in Explosionsdarstellung,

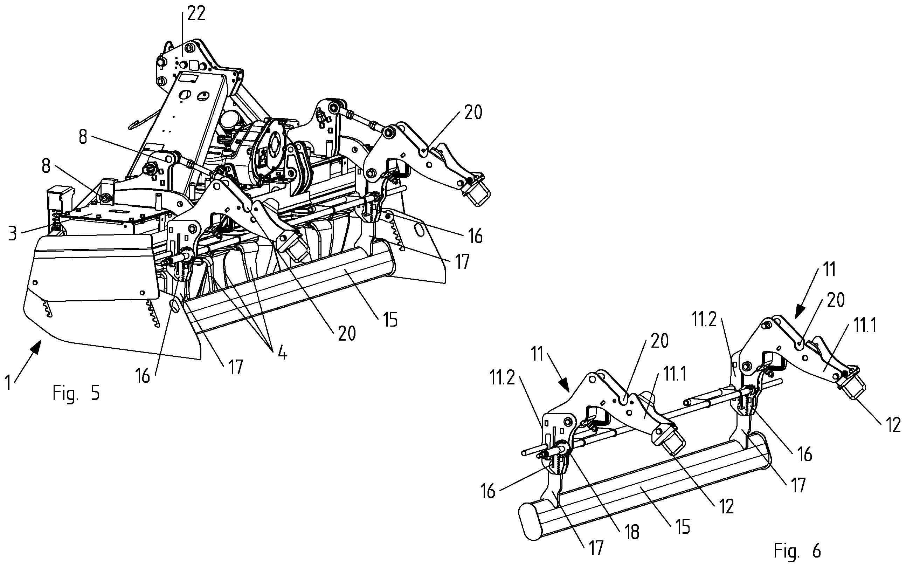

- Fig.5: die Bodenbearbeitungsmaschine mit den Konsolen und Planierschild, jedoch ohne Bodenwalze und Aufbausämaschine in perspektivischer Darstellung,
- Fig.6: das Planierschild mit den Konsolen in der Darstellungsweise nach Fig.6,

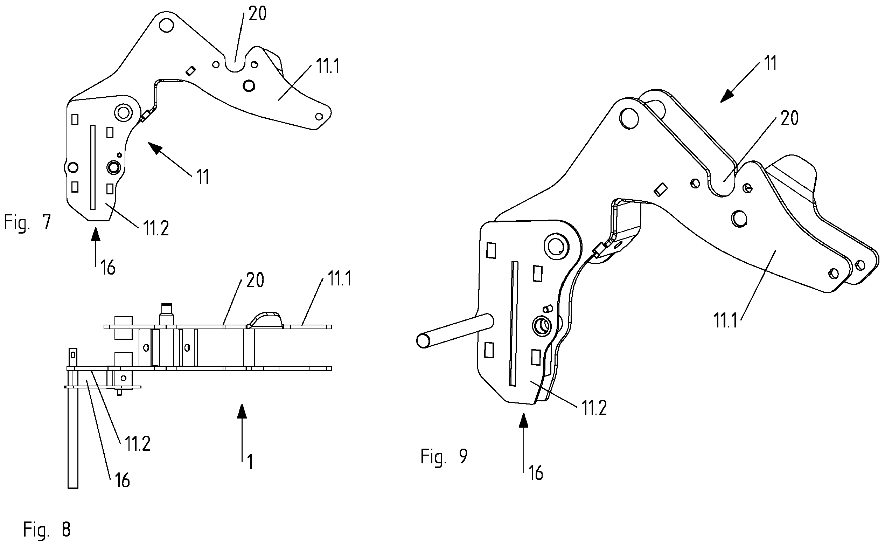

- Fig.7: die Konsole in Seitenansicht,
- Fig.8: die Konsole in Draufsicht und
- Fig.9: die Konsole in perspektivischer Darstellung.

Die Bodenbearbeitungsmaschine 1 ist als Kreiselegge ausgebildet und weist einen quer sich zur Fahrtrichtung 2 erstreckenden Werkzeugrahmen 3 auf. In dem Werkzeugrahmen 3 sind mehrere beabstandet zueinander angeordnete Werkzeugkreisel mit daran befestigten Bodenbearbeitungswerkzeugen 4 zur Bodenbearbeitung angeordnet. Hinter den Bodenbearbeitungswerkzeugen 4 ist eine einen Tragrahmen 5 aufweisende Bodenwalze 6 angeordnet. Die Bodenwalze 6 ist quer zur Fahrtrichtung 2 beabstandet zueinander angeordnete als Tragarme 7.1 und 7.2 ausgebildete Verbindungselemente 7 mit dem Werkzeugrahmen 3 der Bodenbearbeitungsmaschine in höhenverstellbar Weise zur Einstellung der Eindringtiefe der Bodenbearbeitungswerkzeuge 4 in den Boden verbunden. Auf jeder Seite der Bodenbearbeitungsmaschine sind untere Tragarme 7.1 und obere Tragarme 7.2 in Art einer Viergelenkanordnung angeordnet. Die vorderen Enden der Tragarme 7.1 und 7.2 sind über Gelenkbolzen 8 an geeigneten Rahmenelemente 9 des Werkzeugrahmens 3 der Bodenbearbeitungsmaschine 1 angelenkt. Zwischen den unteren Tragarmen 7.1 und den Rahmenelementen 9 des Werkzeugrahmens 1 der Bodenbearbeitungsmaschine 1 befinden sich Einstellelemente 10 zur Einstellung der Höhenlage der Bodenwalze 6 zur Bodenbearbeitungsmaschine 1.

An dem Tragrahmen 5 der Bodenwalze 6 sind im Bereich der Tragarme 7.1 und 7.2 jeweils winkelförmig ausgebildete Konsolen 11 angeordnet. Somit befindet sich jeweils zwischen dem Tragrahmen 5 der Bodenwalze 6 und der in Viergelenkanordnung angeordneten Tragarme 7.1 und 7.2 jeweils eine an den Tragrahmen 5 der Bodenwalze 6 befestigte winkelförmig ausgebildete Konsole 11. Die jeweilige Konsole 11 ist mittels geeigneten als winkelförmigen Schraubbügel ausgebildeten Klemmelementen 12 an dem Tragrahmen 5 in angeschraubter Weise angeklemmt.

Jede Konsole 11 weist jeweils einen nach hinten ragenden Konsolenarm 11.1 und einen vorderen nach unten ragenden Konsolenarm 11.2 auf. Der jeweilige hintere Konsolenarm 11.1 der Konsole 11 ist mittels der geeigneten winkelförmigen Schraubbügeln 12 an den Querbalken 13 des Tragrahmens 5 befestigt. Der jeweilige vordere Konsolenarm 11.2 der Konsole 11 ragt in den Zwischenraum 14 zwischen der Rückseite der Bodenbearbeitungswerkzeuge 4 und der Vorderseite der Bodenwalze 6 nach unten.

Zwischen den Bodenbearbeitungswerkzeugen 4 und der Bodenwalze 6 ist eine als Planierschild 15 ausgebildete Planierschiene an den Konsolen 11 angeordnet. Die Konsolen 11 weisen jeweils an dem vorderen nach unten ragenden Konsolenarm 11.2 eine Schiebeführung 16 auf. Diese Schiebeführungen 16 dienen jeweils zur Aufnahme der an dem Planierschild 15 befestigten Tragstiele 17. In dieser Schiebeführung 16 ist der jeweilige Tragstiel 17 verschiebbar angeordnet ist. Somit kann das Planierschild 15 in der Höhe gegenüber der Bodenwalze 6 und der Bodenbearbeitungsmaschine 1 in der Höhe verstellt und mittels geeigneter Festsetzelemente 18 in der gewünschten Position fixiert werden. Das Planierschild 15 ist an dem nach unten ragenden Konsolenarm 11.2 jeweils mit einem Tragstiel 17 befestigt ist. Somit ist das Planierschild 15 über Tragstiele 17 mit dem Tragrahmen 5 der Bodenwalze 6 verbunden.

Mittels Kuppelelementen 18 ist auf den jeweils nach hinten ragenden Konsolenarm 11.1 der Konsolen 11 eine Aufbausämaschine 19 aufzusetzen und entsprechend zu befestigen. Hierzu weist der obere nach hinten weisende Konsolenarm 11.1 entsprechende Lageraufnahmen 20 auf. Zusätzlich ist die Aufbausämaschine 19 mit einem oberen Lenker 21 mit dem oberen Bereich des Anbauturmes 22 der Bodenbearbeitungsmaschine 1 verbunden. Die Lageraufnahmen 20 an dem Konsolenarm 11.1 sind so ausgestaltet, dass je nach Einsatzfall die jeweils geeignete Aufbausämaschine 19 auf der Bodenwalze 6 zu befestigen ist.

## Patentansprüche

1. Bodenbearbeitungsmaschine (1) mit einem quer sich zur Fahrtrichtung (2) erstreckenden Werkzeugrahmen (3), an denen mehrere beabstandet zueinander angeordnete Bodenbearbeitungswerkzeuge (4) zur Bodenbearbeitung angeordnet sind, eine hinter den Bodenbearbeitungswerkzeugen (4) angeordnete und einen Tragrahmen (5) aufweisende Bodenwalze (6), die über quer zur Fahrtrichtung (2) beabstandet zueinander angeordnete Tragarme (7.1, 7.2) mit dem Werkzeugrahmen (3) in höhenverstellbarer Weise zur Einstellung der Eindringtiefe der Bodenbearbeitungswerkzeuge (4) in den Boden verbunden ist, eine zwischen den Bodenbearbeitungswerkzeugen (4) und der Bodenwalze (6) angeordnete Planierschiene (15), die über Tragstiele (17) mit dem Tragrahmen (5) der Bodenwalze (6) verbunden ist, wobei die Tragarme (7.1, 7.2) als Viergelenkanordnung ausgebildet sind, **dadurch gekennzeichnet, dass** zwischen dem Tragrahmen (5) der Bodenwalze (6) und der in Viergelenkanordnung angeordneten Tragarme (7.1, 7.2) jeweils eine an den Tragrahmen (5) der Bodenwalze (6) befestigte winkelförmig ausgebildete Konsole (11), die jeweils einen nach hinten ragenden Konsolenarm (11.1) und einen vorderen nach unten ragenden Konsolenarm (11.2) aufweist, angeordnet ist, dass der jeweilige hintere Konsolenarm (11.1) der Konsole (11) an dem Tragrahmen (5) befestigt ist und der jeweilige vordere Konsolenarm (11.2) der Konsole (11) in den Zwischenraum (14) zwischen der Rückseite der Bodenbearbeitungswerkzeuge (4) und der Vorderseite der Bodenwalze (6) nach unten ragt, dass an dem nach unten ragenden Konsolenarm (11.2) das Planierschild (15) jeweils mit einem Tragstiel (17) befestigt ist.

2. Bodenbearbeitungsmaschine nach Anspruch 1, **dadurch gekennzeichnet, dass** die jeweilige Konsole (11) an dem Tragrahmen (5) der Bodenwalze (6) mittels Klemmelementen (12) befestigt ist.

3. Bodenbearbeitungsmaschine nach zumindest einem der vorstehenden Ansprüche, **dadurch gekennzeichnet, dass** mittels Kuppelelementen (18, 20) auf den jeweils nach hinten ragenden Konsolenarm (11.1) der Konsolen (11) eine Aufbausämaschine (19) aufsetzbar ist.

4. Bodenbearbeitungsmaschine nach zumindest einem der vorstehenden Ansprüche, **dadurch gekennzeichnet, dass** der jeweilige vordere und nach unten ragende Konsolenarm (11.2) eine Schiebeführung (16) aufweist, dass in dieser Schiebeführung (16) der Tragstiel (17) verschiebbar angeordnet ist.

## Claims

1. Soil cultivation machine (1) having a tool frame (3) which extends transversely to the direction of travel (2) and on which a plurality of soil cultivation tools (4) for soil cultivation that are arranged in a manner spaced apart from one another are arranged, a ground roller (6) that is arranged behind the soil cultivation tools (4) and has a supporting frame (5), said ground roller (6) being connected to the tool frame (3), via supporting arms (7.1, 7.2) that are arranged in a manner spaced apart from one another transversely to the direction of travel (2), in a height-adjustable manner in order to set the penetration depth of the soil cultivation tools (4) into the ground, a levelling bar (15) which is arranged between the soil cultivation tools (4) and the ground roller (6) and is connected to the supporting frame (5) of the ground roller (6) via supporting stems (17), wherein the supporting arms (7.1, 7.2) are configured as a four-bar linkage arrangement, **characterized in that**, between the supporting frame (5) of the ground roller (6) and the supporting arms (7.1, 7.2) arranged in a four-bar linkage arrangement, there is arranged a respective angularly configured bracket (11) that is fastened to the supporting frame (5) of the ground roller (6) and has in each case a rearwardly projecting bracket arm (11.1) and a front downwardly projecting bracket arm (11.2), **in that** each rear bracket arm (11.1) of the bracket (11) is fastened to the supporting frame (5) and each front bracket arm (11.2) of the bracket (11) projects downwardly into the intermediate space (14) between the rear side of the soil cultivation tools (4) and the front side of the ground roller (6), **in that** the levelling bar (15) is fastened to the downwardly projecting bracket arm (11.2) in each case by a supporting stem (17).

2. Soil cultivation machine according to Claim 1, **characterized in that** each bracket (11) is fastened to the supporting frame (5) of the ground roller (6) by means of clamping elements (12).

3. Soil cultivation machine according to at least one of the preceding claims, **characterized in that** a pack top seed drill (19) is able to be placed on the respectively rearwardly projecting bracket arm (11.1) of the brackets (11) by means of coupling elements (18, 20) .

4. Soil cultivation machine according to at least one of the preceding claims, **characterized in that** each front and downwardly projecting bracket arm (11.2) has a sliding guide (16), **in that** the supporting stem (17) is arranged in a movable manner in this sliding guide (16) .

## Revendications

1. Machine de travail du sol (1) avec un châssis porte-outils (3) s'étendant transversalement à la direction de marche (2), sur lequel plusieurs outils de travail du sol (4) espacés l'un de l'autre sont disposés en vue du travail du sol, avec un rouleau de sol (6) disposé derrière les outils de travail du sol (4) et présentant un châssis porteur (5), qui est relié par des bras de support (7.1, 7.2) disposés à distance l'un de l'autre transversalement à la direction de marche (2) au châssis porte-outils (3) de façon réglable en hauteur pour le réglage de la profondeur de pénétration des outils de travail du sol (4) dans le sol, avec une barre de nivelage (15) disposée entre les outils de travail du sol (4) et le rouleau de sol (6), qui est reliée par des branches de support (17) au châssis porteur (5) du rouleau de sol (6), dans laquelle les bras de support (7.1, 7.2) sont formés par un système de quadrilatère articulé, **caractérisée en ce qu'**une console (11) de forme coudée fixée respectivement au châssis porteur (5) du rouleau de sol (6), qui présente respectivement un bras de console (11.1) s'étendant vers l'arrière et un bras de console avant (11.2) s'étendant vers le bas, est disposée entre le châssis porteur (5) du rouleau de sol (6) et les bras de support (7.1, 7.2) disposés en forme de quadrilatère articulé, **en ce que** le bras de console arrière respectif (11.1) de la console (11) est fixé sur le châssis porteur (5) et le bras de console avant respectif (11.2) de la console (11) pénètre vers le bas dans l'espace intermédiaire (14) entre le côté arrière des outils de travail du sol (4) et le côté avant du rouleau de sol (6), et **en ce que** la lame de nivelage (15) est fixée respectivement avec une branche de support (17) au bras de console (11.2) s'étendant vers le bas.

2. Machine de travail du sol selon la revendication 1, **caractérisée en ce que** la console respective (11) est fixée au châssis porteur (5) du rouleau de sol (6) au moyen d'éléments de serrage (12).

3. Machine de travail du sol selon au moins une des revendications précédentes, **caractérisée en ce qu'**un semoir porté (19) peut être installé au moyen d'éléments d'accouplement (18, 20) sur le bras de console s'étendant respectivement vers l'arrière (11.1) des consoles (11).

4. Machine de travail du sol selon au moins une des revendications précédentes, **caractérisée en ce que** le bras de console respectif avant et s'étendant vers le bas (11.2) présente un guidage coulissant (16) et **en ce que** la branche de support (17) est disposée de façon coulissante dans ce guidage coulissant (16).
